# EUROPEAN PATENT SPECIFICATION

(11) **EP 4 308 646 B1**
(45) Date of publication and mention of the grant of the patent: **25.11.2026**
(21) Application number: 22716487.8
(22) Date of filing: 18.03.2022
(51) Int. Cl.: C08L 23/12, C08L 99/00

(54) **TREATMENT OF COFFEE GROUNDS**
BEHANDLUNG VON GEMAHLENEM KAFFEE
TRAITEMENT DE MARC DE CAFÉ

(30) Priority: 18.03.2021 GB 202103810
(43) Date of publication of application: 24.01.2024
(73) Proprietor: Colloids Limited, North Kirkby, Merseyside L33 7SY (GB)
(72) Inventor: COTTON, Graham, Rushden NN10 6BP (GB); JEFFS, Sophie, Rushden NN10 6BP (GB)
(74) Representative: Harrison, Michael Robert
(86) International application number: PCT/IB2022/052493
(87) International publication number: WO 2022/195555

(56) References cited:
- EP-A1- 3 369 766
- US-A- 3 499 851
- WU HAIJIE ET AL: "Effect of oil extraction on properties of spent coffee ground-plastic composites", JOURNAL OF MATERIAL SCIENCE, KLUWER ACADEMIC PUBLISHERS, DORDRECHT, vol. 51, no. 22, 4 August 2016 (2016-08-04), pages 10205 - 10214, XP036038828, ISSN: 0022-2461, [retrieved on 20160804], DOI: 10.1007/S10853-016-0248-2
- MUSTAFFAR AHMAD ET AL: "Hybrid heat pipe screw dryer: A novel, continuous and highly energy-efficient drying technology", CHEMICAL ENGINEERING AND PROCESSING: PROCESS INTENSIFICATION, vol. 128, 1 June 2018 (2018-06-01), CH, pages 199 - 215, XP055936282, ISSN: 0255-2701, DOI: 10.1016/j.cep.2018.04.035
- GARCÍA-GARCÍA D ET AL: "Green composites based on polypropylene matrix and hydrophobized spend coffee ground (SCG) powder", COMPOSITES PART B, ELSEVIER, AMSTERDAM, NL, vol. 78, 4 April 2015 (2015-04-04), pages 256 - 265, XP029170940, ISSN: 1359-8368, DOI: 10.1016/J.COMPOSITESB.2015.03.080
- BONG-SAN BAEK ET AL: "Development and Application of Green Composites: Using Coffee Ground and Bamboo Flour", JOURNAL OF POLYMERS AND THE ENVIRONMENT, vol. 21, no. 3, 11 April 2013 (2013-04-11), US, pages 702 - 709, XP055482411, ISSN: 1566-2543, DOI: 10.1007/s10924-013-0581-3

## Description

### FIELD OF THE INVENTION

This patent is related to methods for treatment of coffee grounds to produce fillers for plastics.

### BACKGROUND TO THE INVENTION

There is considerable availability of spent coffee grounds remaining after the removal of the soluble matter from ground coffee beans. Spent coffee grounds are useful as a versatile filler for various types of plastic materials, especially thermosetting moulding materials, the products obtained being as good as or even better than those obtained with the use of conventional fillers.

For most purposes the spent coffee grounds are too coarse for use as a filler so that, before use, it is normally necessary for the spent grounds to be ground to a flour. The spent coffee grounds may be converted into flour by, for example, grinding or pounding in a hammer mill.

Coffee beans have quite a high oil content; the major proportion of this oil still remains behind in the spent coffee grounds even after extraction of the water-solubles by the most efficient methods, including hydrolysis. Since the quantity of the oil has been only slightly reduced, whereas the total quantity of coffee grounds has been greatly reduced as a result of expression of the water-soluble matter, the content of oil in spent coffee grounds is actually substantially higher than in coffee berries. One sample of instant coffee residues was found to contain as much as 26.66% of coffee oil (as extractable by petroleum ether).

Coffee grounds contain triglycerides and water both of which cause detrimental effects to the particular the physical properties of the plastic material. The impact strength is reduced and also the aesthetic properties of the surface finish is poor. This is due to the elevated temperature during processing of the polymer. Excess oil may also migrate from the product over time and limit uses which involve contact with food.

Processes of treating spent coffee grounds are known from EP3369766A1, US3499851A and Wu, Haijie et al., Effect of oil extraction on properties of spent coffee ground-plastic composites, in: Journal of Material Science, vol. 51, 2016, pages 10205-10214.

### STATEMENTS OF THE INVENTION

According to the present invention, there is provided a method of treatment of spent coffee grounds which comprises sieving the grounds to remove larger particles, passing the sieved grounds through a screw feeder to remove oils and water, the screw feeder being heated to a temperature of from 130 to 140°C, and grinding the grounds to a powder.

Preferably, the sieving is such as to remove particles having a size greater than 500 microns, more preferably, greater than 250 microns.

The water content is preferably reduced to below 1% by weight, more preferably to below 0.5% by weight, for instance to about 0.37 by weight%.

These process steps reduce the volatiles that are released during the heating of the material whilst incorporating the coffee grinds. This creates porosity that reduces the physical properties. Also improved is the compounding stage of incorporation into the plastic polymer or substrate. The resulting product also has very low moisture content due to reduced porosity and by preventing water pickup during the cooling process of the polymer/substrate.

The feeding screw is provided with a feeding section which leads into a high compression zone where volatiles, oil and water are extracted using heat and pressure. The feeding screw then conveys the material into a metering section which is cold to break down and grind the coffee against a mesh screen.

The resultant treated grounds may be then dispersed into a plastic polymer. This may be accomplished by, for instance, melt blending or pre-blending the grounds into a plastic polymer in an extruder or an injection moulding machine or by direct feeding into liquid dispersions of the plastic material.

Preferably, the treated grounds are mixed with the plastic polymer in a twin-screw extruder at a temperature in the range 180 - 220°C, preferably about 200°C. Preferably, the extruder is vented to allow gases to be evacuated. A pump may be attached to the vent port to create a vacuum to increase the extraction of gas.

The extruder may be provided with at least one de-volatising zone with a vacuum to extract remaining volatiles including moisture.

The total volatile content of the final composition is preferably less than 1% by weight, preferably less than 0.5% by weight, desirably less than 0.2% by weight and can be as low as 0.1% by weight.

The treated coffee grounds are encapsulated in the polymer and the resultant material may then be forced through a die before being cooled in water and pelletised into pellets of, typically, 3mm in size.

Also described is a plastic polymer composition comprising one or more polymers and spent coffee grounds which have been treated by a method of the invention. Preferably, the amount of spent coffee grounds in the composition is from 20 to 40% by weight, for instance, about 30% by weight.

### BRIEF DESCRIPTION OF THE DRAWINGS

The accompanying drawings are as follows:

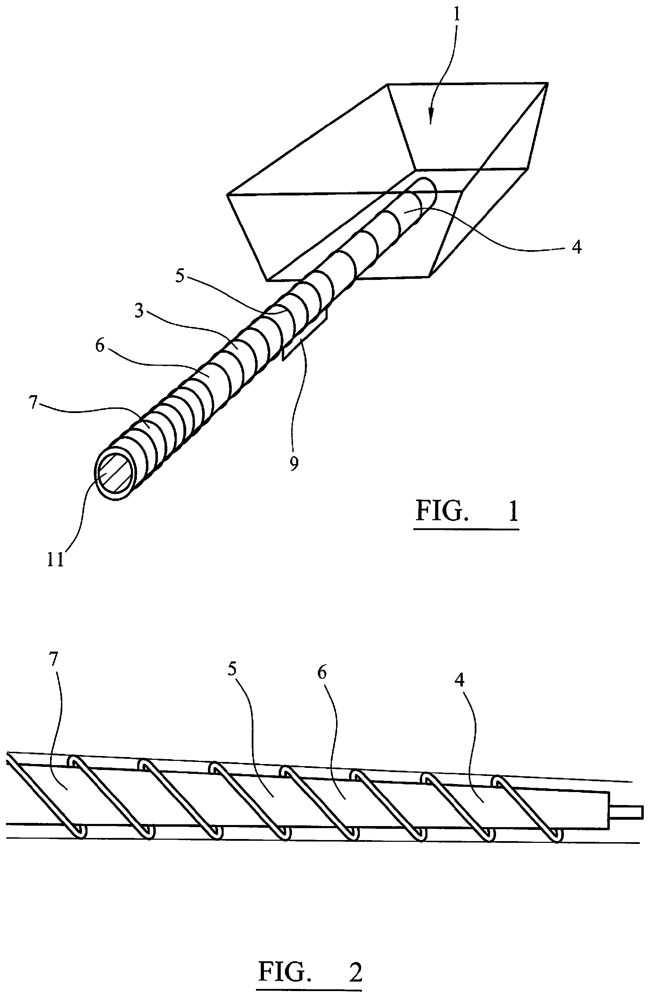

Figure 1 is a diagrammatic view of the oil and water removing stage in the treatment of coffee grounds according to an embodiment of the present invention;
Figure 2 is a more detailed view of the heated section of the screw feeder used in the oil and water removing stage of Figure 1;
Figure 3 is a diagrammatic view of the polymer dispersing stage in the treatment of coffee grounds according to an embodiment of the invention; and
Figure 4 shows the surfaces of polymer tiles incorporating coffee grounds which have not been treated by a process of the invention (left hand illustration) and tiles incorporating coffee grounds which have been treated by a process of the invention (right hand illustration).

### DETAILED DESCRIPTION OF THE INVENTION

Referring to the accompanying drawings, an embodiment of a method of treatment of spent coffee grounds comprises a first stage in which the grounds are sieved to remove the largest particles, for instance, those with a largest dimension greater than 500 microns.

The sieved grounds are the fed into the loading hopper 1 for a screw feeder 3. The screw feeder 3 conveys the grounds through a compression zone 5, the screw 6 of the screw feeder being in this zone heated to a temperature of from 130 to 140°C, followed by a conveying and metering zone 7, which is unheated, allowing the grounds to cool.

In heated zone 5, oil separates from the coffee grounds and is extracted from the screw feeder at location 9.

At the exit end of the screw feeder, there may be located a mesh 11 through which the grounds pass.

The coffee grounds which exit from the screw feeder are then subjected to grinding to form a powder which is fed, along with polymer powder, to the feed section 15 of a twin-screw extruder 17. During passage through the extruder 17 the temperature is maintained at about 200°C. Vacuum ventilation is applied to extruder 17 via port 19 and, adjacent the downstream end of the extruder devolatilising and gas extraction is effected via port 21,

The mixture of polymer and spent coffee grounds powder which exits from twin scew extruder 17 is then forced through a die before being cooled in water and pelletised into pellets of, typically, 3mm in size.

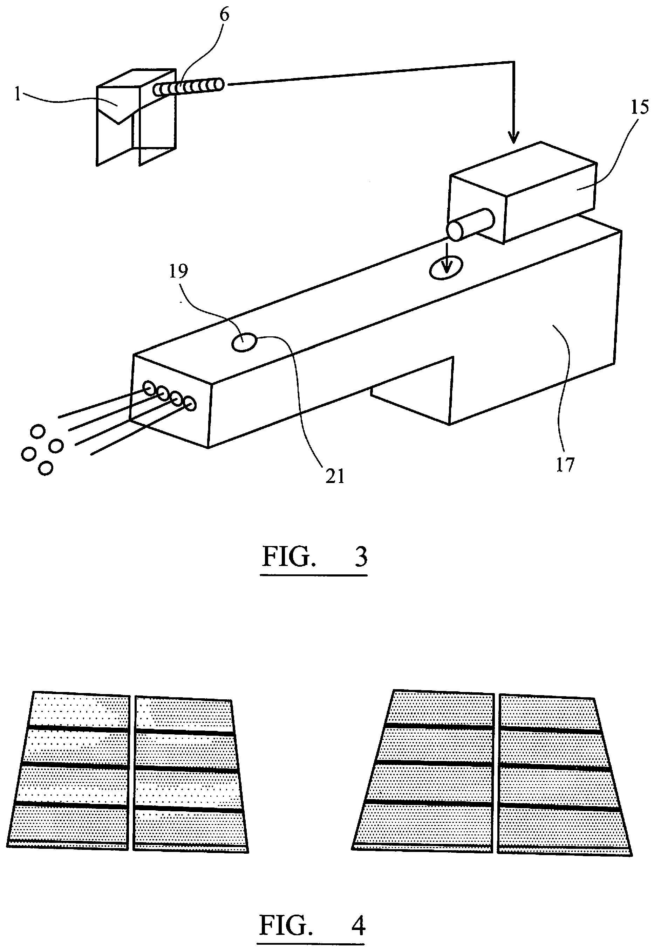

Figure 4 of the accompanying drawings shows the surfaces of polymer tiles incorporating coffee grounds which have not been treated by a process of the invention (left hand illustration) and tiles incorporating coffee grounds which have been treated by a process of the invention (right hand illustration). It can be seen that the tiles which contain coffee grounds which have been treated by a process of the invention are free of blemishes and defects when compared to the other tiles.

### SPECIFIC EXAMPLE

100Kg of a polypropylene composition made in accordance with a method of the present invention comprised 68 KG polypropylene homopolymer, 2 Kg polyethylene wax and 30Kg used coffee grounds.

## Claims

1. A method of treatment of spent coffee grounds which comprises sieving the grounds to remove larger particles, passing the sieved grounds through a screw feeder having a compression zone to remove oils and water, the screw of the screw feeder being heated in the compression zone to a temperature of from 130 to 140°C, and grinding the grounds to a powder.

2. A method according to Claim 1, wherein the sieving is such as to remove particles having a size greater than 500 microns.

3. A method according to Claim 2, wherein the sieving is such as to remove particles having a size greater than 250 microns.

4. A method according to any of the preceding claims, wherein the water content is reduced to below 1% by weight.

5. A method according to Claim 4, wherein the water content is reduced to below, more preferably to below 0.5% by weight.

6. A method according to Claim 5, wherein the water content is reduced to about 0.37% by weight.

7. A method according to any of the preceding claims, wherein the treated grounds are dispersed into a plastic polymer.

8. A method according to Claim 7, wherein the treated grounds are dispersed into a twin-screw extruder at a temperature in the range 180 - 220°C.

9. A method according to Claim 8, wherein the treated grounds are dispersed into a twin-screw extruder at a temperature of about 200⁰C.

10. A method according to Claim 8 or Claim 9, wherein the extruder is vented to allow gases to be evacuated.

11. A method according to any of Claims 8 to 10, wherein the extruder is provided with a vent port to which a pump may be attached to create a vacuum to increase the extraction of gas.

12. A method according to any of Claims 8 to 10, wherein the extruder is provided with at least one de-volatising zone with a vacuum to extract remaining volatiles including moisture.

13. A method according to any of Claims 7 to 12, wherein the volatile content of the plastic polymer in which the treated coffee grounds are dispersed is less than 1% by weight.

14. A method according to Claim 13, wherein the volatile content of the plastic polymer in which the treated coffee grounds are dispersed is less than 0.2% by weight.

15. A method according to Claim 14, wherein the volatile content of the plastic polymer in which the treated coffee grounds are dispersed is about 0.1% by weight.

## Patentansprüche

1. Verfahren zur Behandlung von Kaffeesatz, umfassend das Sieben des Kaffeesatzes zur Entfernung größerer Partikel, das Hindurchführen des gesiebten Kaffeesatzes durch eine Schneckenfördervorrichtung mit einer Kompressionszone zur Entfernung von Ölen und Wasser, wobei die Schnecke der Schneckenfördervorrichtung in der Kompressionszone auf eine Temperatur von 130 bis 140 °C erhitzt wird, sowie das Vermahlen des Kaffeesatzes zu einem Pulver.

2. Verfahren nach Anspruch 1, wobei das Sieben derart erfolgt, dass Partikel mit einer Größe von mehr als 500 Mikrometern entfernt werden.

3. Verfahren nach Anspruch 2, wobei das Sieben derart erfolgt, dass Partikel mit einer Größe von mehr als 250 Mikrometern entfernt werden.

4. Verfahren nach einem der vorhergehenden Ansprüche, wobei der Wassergehalt auf unter 1 Gew.-% reduziert wird.

5. Verfahren nach Anspruch 4, wobei der Wassergehalt auf unter 0,5 Gew.-% reduziert wird.

6. Verfahren nach Anspruch 5, wobei der Wassergehalt auf etwa 0,37 Gew.-% reduziert wird.

7. Verfahren nach einem der vorhergehenden Ansprüche, wobei der behandelte Kaffeesatz in ein Kunststoffpolymer dispergiert wird.

8. Verfahren nach Anspruch 7, wobei der behandelte Kaffeesatz in einem Doppelschneckenextruder bei einer Temperatur im Bereich von 180-220 °C dispergiert wird.

9. Verfahren nach Anspruch 8, wobei der behandelte Kaffeesatz in einem Doppelschneckenextruder bei einer Temperatur von etwa 200 °C dispergiert wird.

10. Verfahren nach Anspruch 8 oder Anspruch 9, wobei der Extruder entlüftet wird, um das Abführen von Gasen zu ermöglichen.

11. Verfahren nach einem der Ansprüche 8 bis 10, wobei der Extruder mit einer Entlüftungsöffnung versehen ist, an die eine Pumpe angeschlossen werden kann, um ein Vakuum zu erzeugen und so den Gasaustrag zu verstärken.

12. Verfahren nach einem der Ansprüche 8 bis 10, wobei der Extruder mit mindestens einer Entgasungszone ausgestattet ist, in der mittels Vakuum verbliebene flüchtige Bestandteile, einschließlich Feuchtigkeit, abgezogen werden.

13. Verfahren nach einem der Ansprüche 7 bis 12, wobei der Gehalt an flüchtigen Bestandteilen in dem Kunststoffpolymer, in dem der behandelte Kaffeesatz dispergiert ist, weniger als 1 Gew.-% beträgt.

14. Verfahren nach Anspruch 13, wobei der Gehalt an flüchtigen Bestandteilen in dem Kunststoffpolymer, in dem der behandelte Kaffeesatz dispergiert ist, weniger als 0,2 Gew.-% beträgt.

15. Verfahren nach Anspruch 14, wobei der Gehalt an flüchtigen Bestandteilen in dem Kunststoffpolymer, in dem der behandelte Kaffeesatz dispergiert ist, etwa 0,1 Gew.-% beträgt.

## Revendications

1. Procédé de traitement du marc de café, comprenant le tamisage du marc pour éliminer les particules les plus grosses, le passage du marc tamisé dans un dispositif d'alimentation à vis doté d'une zone de compression afin d'en extraire les huiles et l'eau - la vis dudit dispositif étant chauffée, dans la zone de compression, à une température comprise entre 130 et 140 °C - et le broyage du marc pour obtenir une poudre.

2. Procédé selon la revendication 1, dans lequel le tamisage permet d'éliminer les particules dont la taille est supérieure à 500 microns.

3. Procédé selon la revendication 2, dans lequel le tamisage permet d'éliminer les particules dont la taille est supérieure à 250 microns.

4. Procédé selon l'une quelconque des revendications précédentes, dans lequel la teneur en eau est réduite à une valeur inférieure à 1 % en poids.

5. Procédé selon la revendication 4, dans lequel la teneur en eau est réduite à une valeur inférieure à 0,5 % en poids.

6. Procédé selon la revendication 5, dans lequel la teneur en eau est réduite à environ 0,37 % en poids.

7. Procédé selon l'une quelconque des revendications précédentes, dans lequel le marc traité est dispersé dans un polymère plastique.

8. Procédé selon la revendication 7, dans lequel le marc traité est dispersé au sein d'une extrudeuse à double vis, à une température comprise entre 180 et 220 °C.

9. Procédé selon la revendication 8, dans lequel le marc traité est dispersé au sein d'une extrudeuse à double vis, à une température d'environ 200 °C.

10. Procédé selon la revendication 8 ou la revendication 9, dans lequel l'extrudeuse est équipée d'un évent permettant l'évacuation des gaz.

11. Procédé selon l'une quelconque des revendications 8 à 10, dans lequel l'extrudeuse est pourvue d'un orifice d'évent auquel peut être raccordée une pompe, afin de créer un vide favorisant l'extraction des gaz.

12. Procédé selon l'une quelconque des revendications 8 à 10, dans lequel l'extrudeuse est munie d'au moins une zone de dévolatilisation sous vide destinée à extraire les substances volatiles résiduelles, y compris l'humidité.

13. Procédé selon l'une quelconque des revendications 7 à 12, dans lequel la teneur en substances volatiles du polymère plastique dans lequel le marc de café traité est dispersé est inférieure à 1 % en poids.

14. Procédé selon la revendication 13, dans lequel la teneur en substances volatiles du polymère plastique dans lequel le marc de café traité est dispersé est inférieure à 0,2 % en poids.

15. Procédé selon la revendication 14, dans lequel la teneur en substances volatiles du polymère plastique dans lequel le marc de café traité est dispersé est d'environ 0,1 % en poids.
